# FASCICULE DE BREVET EUROPEEN

(11) **EP 3 623 273 B1**
(45) Date de publication et mention de la délivrance du brevet: **02.03.2022**
(21) Numéro de dépôt: 19197588.7
(22) Date de dépôt: 16.09.2019
(51) Int. Cl.: B62K 23/04, B62K 11/14

(54) **DISPOSITIF DE MAINTIEN EN POSITION D'UNE POIGNÉE D'ACCÉLÉRATION**
HALTEVORRICHTUNG EINES GASDREHGRIFFES
POSITION HOLDING DEVICE OF A THROTTLE LEVER

(30) Priorité: 17.09.2018 FR 1858344
(43) Date de publication de la demande: 18.03.2020
(73) Titulaire: Beraka, Philippe, 33500 Libourne (FR)
(72) Inventeur: Beraka, Philippe, 33500 Libourne (FR)
(74) Mandataire: Aquinov

(56) Documents cités:
- CN-U- 203 958 507
- CN-U- 204 956 817
- US-A- 3 982 446
- US-A- 4 287 785
- US-A1- 2008 184 839
- US-A1- 2013 213 177

## Description

La présente invention concerne un dispositif de maintien en position d'une poignée d'accélération. Dans le domaine de la moto ou dans le nautisme, les poignées d'accélération, rotatives, sont couramment utilisées pour contrôler l'accélération du moteur et donc l'accélération du véhicule motorisé associé.

Les poignées d'accélération sont constamment utilisées sur les motos, l'accélération s'effectuant par rotation de la poignée autour de l'axe supportant la poignée. La poignée est apte à subir un effort de rappel, développé dans la partie mécanique du moteur et destiné à ramener via les câbles de commande, la poignée d'accélération dans une certaine position angulaire, généralement le ralenti.

Lorsque la moto est utilisée sur des routes sur lesquelles la vitesse est maintenue constante, par exemple sur des autoroutes ou des routes peu fréquentées, il est souvent astreignant d'avoir à maintenir la poignée d'accélération dans une position précise pour maintenir une vitesse constante, ce qui revient à contrer l'effet rotatif engendré par l'effort de rappel.

Les régulateurs électroniques sont des éléments connus et désormais très répandus sur les voitures. Si les régulateurs électroniques sont répandus et performants, ils sont plus complexes à installer sur les motos qui sont, à l'origine, souvent dépourvues d'un régulateur électronique. De plus, les régulateurs électroniques influent sur les commandes mêmes du moteur.

Un certain nombre de régulateurs mécaniques existent et permettent le maintien en position d'une poignée d'accélération soumise à un rappel élastique en rotation vers le point du ralenti moteur. La plupart des régulateurs mécaniques sont encombrants, nécessitent des forces de verrouillage et de déverrouillage importantes et se trouvent être peu adaptés pour permettre une manipulation aisée, pratique et sécuritaire.

Il faut en effet pouvoir libérer, volontairement, de façon certaine, et sans risque d'un verrouillage intempestif ladite poignée, ceci à tout instant en cas de besoin de couper les gaz de la part du conducteur. Le document US2008/184839A1 décrit une poignée d'accélération connue de l'état de la technique. Ce document divulgue un dispositif de maintien en position d'une poignée d'accélération d'un véhicule, montée sur une barre de direction, par friction contre une surface d'appui solidaire de ladite barre de direction, comportant des moyens d'assemblage, des moyens de guidage, des moyens de positionnement et des moyens de blocage mobiles en translation suivant l'axe Z et comprenant une couronne comportant une face intérieure et une face extérieure.

La solution décrite par la présente invention propose un dispositif de maintien en position d'une poignée d'accélération dont le positionnement et le maintien en position sont réalisés magnétiquement à partir d'une action mécanique exercée par l'utilisateur.

La présente invention est maintenant décrite suivant un mode de réalisation principal, sans que celui-ci soit limitatif, ceci en regard des dessins associés sur lesquels les différentes figures représentent :
- Figure 1 : une vue en élévation du dispositif de maintien en position d'une poignée d'accélération
- Figures 2A, 2B, 2C : une vue éclatée des différents éléments constituant le dispositif de maintien en position d'une poignée d'accélération
- Figure 3 : une vue en perspective des différents éléments constituant le dispositif de maintien en position d'une poignée d'accélération assemblés
- Figure 4A : une vue en coupe du dispositif de maintien en position d'une poignée d'accélération désactivé
- Figure 4B: une vue en coupe du dispositif de maintien en position d'une poignée d'accélération activé

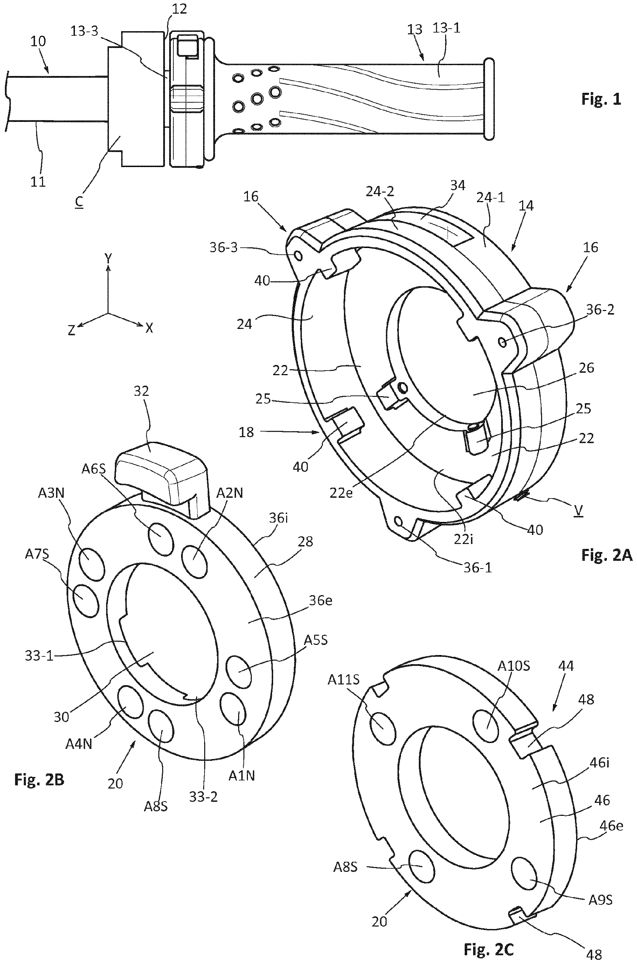

On considère le repère orthonormé X, Y, Z. La figure 1 représente le dispositif de maintien en position montée sur une barre de direction 10, ici un guidon 11, comportant une surface d'appui 12, fixe sur ledit guidon 11, formé par une cocotte C.

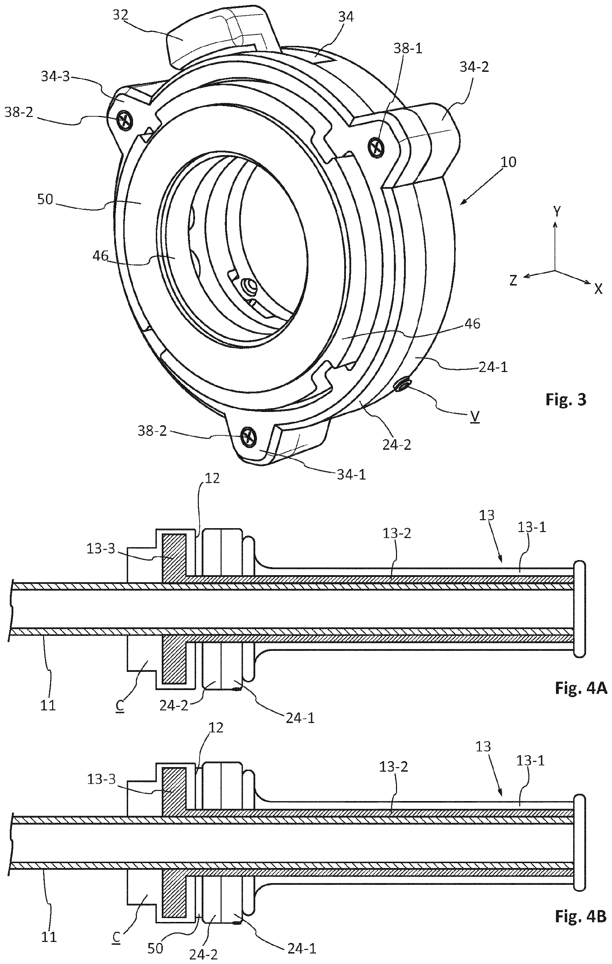

Comme visible sur la figure 1 et les coupes des figures 4A et 4B, le dispositif de maintien en position est solidaire d'une poignée d'accélération 13 montée pivotante sur le guidon 11 et comportant un manchon 13-1 et un tube de commande 13-2 et son disque de commande 13-3 solidarisés. La poignée d'accélération 13 est montée mobile en rotation sur ce même guidon 11, de façon à actionner une commande, généralement une commande à câble, reliant le disque de commande 13-3 du tube de commande 13-2 et la motorisation. Les câbles et les éléments de motorisation ne sont pas détaillés.

Le dispositif de maintien en position d'une poignée d'accélération est formé par des moyens mécaniques 14, des moyens d'assemblage 16, des moyens de guidage 18, des moyens de positionnement 20, visibles sur les figures 2A, 2B, 2C. Ces éléments sont représentés assemblés sur la figure 3. Les figures 4A et 4B représentent le dispositif assemblé au guidon 11 et positionné sur la poignée d'accélération 13.

Les moyens mécaniques 14 sont formés par une surface radiale 22 munie d'un rebord 24 et d'une ouverture 26. La surface radiale 22 possède une face intérieure 22i et une face extérieure 22e, placées dans le plan X, Y. La surface radiale 22 comporte également deux butées 25 étendues sur sa face intérieure 22i et étendues radialement et en saillie sous ladite face intérieure 22i de la surface radiale 22.

Le rebord 24 comprend un premier anneau 24-1 et un second anneau 24-2, assemblés par les moyens d'assemblage 16.

Les moyens mécaniques 14 comportent également un disque 28, comportant une face intérieure 28i, une face extérieure 28e et un trou central 30, placé parallèlement et contre la surface radiale 22. Le disque 28 a un diamètre extérieur égal au diamètre intérieur des premier et second anneaux 24-1 et 24-2 et le trou central 30 a un diamètre égal au diamètre de l'ouverture 26 de la surface radiale 22. Le disque 28 comporte également un levier 32, développé radialement et avec lequel ledit disque 28 forme un élément monolithique. Le levier 32 est développé radialement, c'est-à-dire dans le plan X, Y. Le disque 28 comporte deux décrochements 33-1 et 33-2 sur sa face intérieure 28i, étendus sur un angle radial d'environ 5° et suivant la moitié de l'épaisseur du disque 28, à considérer suivant l'axe radial du disque 28 et donc suivant le plan X, Y.

Les moyens d'assemblage 16 comprennent trois protubérances 34-1, 34-2 et 34-3, ménagées pour moitié sur lesdits premier et second anneaux 24-1 et 24-2. Chaque protubérance est munie d'un filetage 36-1, 36-2 et 36-3 et de vis 38-1, 38-2 et 38-3 qui coopèrent avec lesdits filetages 36-1, 36-2 et 36-3 et assemblent lesdites protubérances 34-1, 34-2 et 34-3 donc le premier anneau avec le second anneau.

Les protubérances 34-1, 34-2 et 34-3 sont réparties en périphérie des anneaux 24-1 et 24-2 avec un angle d'environ 120°. Les anneaux 24-1 et 24-2 sont alors alignés et assemblés par vissage.

Le premier anneau 24-1 du rebord 24 comporte une lumière 35 développée le long de la périphérie et sur un angle radial d'environ 10° et qui se positionne entre le premier anneau 24-1 et le second anneau 24-2, lorsque lesdits anneaux 24-1 et 24-2 sont assemblés par vissage.

Les moyens de guidage 18 sont réalisés par des guides 40 développés sur la paroi intérieure du second anneau 24-2 et étendus suivant l'axe Z. Les faces d'extrémité des guides 40, étendues suivant le plan X, Y, sont également dans le même plan que les faces du second anneau 24-2 étendues suivant le plan X, Y.

A l'intérieur des moyens mécaniques 14, sont placés les moyens de positionnement 20. Les moyens de positionnement 20 comportent au moins trois aimants A, un des au moins trois aimants A étant placé sur les moyens de positionnement 20 et l'autre des au moins trois aimants A étant placé sur les moyens de blocage 44.

Le dispositif de maintien en position comporte donc des moyens de blocage 44 qui se présentent sous forme d'une couronne 46 dotée d'une face intérieure 46i et d'une face extérieure 46e. La couronne 46 présente des gorges 48 développées suivant l'axe Z et réparties sur la paroi périphérique extérieure de la couronne 46. Lesdites gorges 48 ont une répartition radiale identique à la répartition radiale des guides 40 placés sur le second anneau 24-2 et ont une forme conjuguée de celle des guides 40. Ainsi les gorges 48 peuvent être positionnées autour et le long des guides 40.

La couronne 46 comporte sur la face extérieure 46e, un joint de friction 50 réalisé en matière élastomère. Lorsqu'il est placé sur la couronne 46, le joint de friction 50 situé dans le plan X, Y dépasse de ladite couronne 46, suivant l'axe Z.

Les moyens de positionnement 22 sont ici formés par douze aimants A. Les aimants AN1 à AN4 et AS5 à AS8 sont placés sur la face extérieure 28e du disque 28. Les aimants AS9 à AS12 sont, quant à eux, placés sur la face 46i des moyens de blocage 44.

Plus précisément, sur la face du disque 28 comportant les aimants A1N à A4N et A5S à A8S qui est mobile en rotation suivant l'axe Z, les parties apparentes des aimants A1N à A4N sont des pôles nord et les parties apparentes des aimants A5S à A8S sont des pôles sud.

Les aimants A1N à A4N et A5S à A8S sont répartis en quatre couples A1N et A5S, A2N et A6S, A3N et A7S, A4N et A8S à environ 90° d'écartement radial entre chacun des couples. Chaque aimant de chaque couple est espacé radialement de l'autre avec un angle radial d'environ 15°. Sur la face intérieure 46i de la couronne 46, la partie apparente des aimants A9S à A12S correspond à des pôles sud.

Lorsque le dispositif est assemblé, le disque 28 est placé contre la surface radiale 22. Plus précisément la face intérieure 28i du disque 28 est placée contre la face intérieure 22i de la surface radiale 22. Ainsi, les deux décrochements 33-1 et 33-2 sont positionnés autour des deux butées 25. Le disque 28 a un diamètre extérieur égal au diamètre intérieur des anneaux 24-1, au jeu de glissement près. Le disque 28 et le levier 32 sont donc maintenus en position lorsque les vis 32-1, 32-2 et 32-3 assemblent deux à deux les protubérances 34-1 et 34-4, 34-2 et 34-5, 34-3 et 34-6 et donc les deux anneaux 24-1 et 24-2. Le maintien en position et le guidage du disque 28 suivant l'axe Z sont également assurés par les guides 40 ménagés sur l'anneau 24-2. La couronne 46 est placée à l'intérieur de l'anneau 24-2 et a ses gorges 48 placées autour et le long des guides 40.

Le dispositif de maintien en position est placé dans l'axe et à côté de la cocotte C, immobilisant ainsi la rotation de ladite couronne 46. La cocotte C reçoit dans son volume intérieur, le disque de commande 13-3 du tube de commande 13-2 et présente la surface d'appui 12 du même côté que la poignée d'accélération 13.

Ce dispositif de maintien en position angulaire d'une poignée d'accélération d'un véhicule tel qu'une moto, par friction contre une surface d'appui 12, comporte donc des moyens mécaniques 14, des moyens d'assemblage 16, des moyens de guidage 18, des moyens de positionnement 20 et des moyens de blocage 44.

Une fois assemblées comme précédemment décrit, la face extérieure 28e du disque 28 et la face intérieure 46i de la couronne 46 se font face. Les aimants A1N à A8S et A9S à A11S se font donc face et sont, en fonction de la position du disque 28, alignés.

Aussi l'ouverture 26 de la surface radiale 22, le trou central 30 du disque 28 et le centre de la couronne 46 sont de même diamètre et sont parfaitement alignés suivant l'axe Z.

Le fonctionnement et l'utilisation du dispositif de maintien en position d'une poignée d'accélération sont maintenant décrits.

La figure 1 représente le dispositif de maintien en position angulaire d'une poignée d'accélération, monté autour du guidon 11 de moto et plus précisément monté de manière solidaire à la poignée d'accélération 13, la rotation de la poignée d'accélération 13 entraînant la rotation du dispositif de maintien en position qui lui est solidaire.

Le dispositif de maintien en position est solidaire de la poignée d'accélération 13, tous deux étant rotatifs par rapport au guidon 11.

La solidarisation du dispositif de maintien en position sur la poignée d'accélération 13 est obtenue par serrage à l'aide d'au moins une vis V, ici deux vis V axées radialement. Le dispositif de maintien en position peut également être solidarisé à la poignée d'accélération 13 par collage ou tout autre moyen de fixation.

Le disque 28 et le levier 32 sont mobiles en rotation autour de l'axe Z. Le levier 32 qui s'étend radialement par rapport à l'axe Z, s'étend à travers la lumière 35 et peut ainsi pivoter à basculement dans ladite lumière 35 dans le plan X,Y. Les butées 25 autour desquelles coulissent les deux décrochements 33-1 et 33-2 limitent la rotation du disque 28 et donc le pivotement à basculement du levier 32 à environ 15°. Le bon guidage de la rotation est assuré par la présence des guides 40 qui permettent un positionnement radial du disque 28 et donc des aimants A1N à A8S portés par ledit disque 28. La rotation du disque 28, contrôlée par la manœuvre du levier 32 permet de positionner les aimants A1N, A3N, A5S, A7S ou les aimants A2N, A4N, A6S, A8S en face des aimants A9S, A10S, A11S, A12S placés sur la face intérieure 46i des moyens de blocage 44.

Lorsque les aimants A1N à A4N, laissant apparaître des pôles nord, sont alignés suivant l'axe Z, avec les aimants A9S à A12S qui présentent des faces sud, lesdits aimants A1N à A4N et les aimants A9S à A12S s'attirent et rapprochent ainsi du disque 28, les moyens de blocage mobiles suivant l'axe Z.

La manipulation mécanique du levier 32, par l'utilisateur engendre la rotation du disque 28 autour de l'axe Z et permet le positionnement des aimants A5S à A8S, qui présentent des faces sud, en face des aimants A9S à A12S, qui présentent également des faces sud. Le positionnement de pôles sud similaires l'un en face de l'autre crée une répulsion des aimants A5S à A8S et des aimants A9S à A12S. La répulsion des aimants A5S à A8S et des aimants A9S à A12S engendre une translation des moyens de blocage 44 suivant l'axe Z et donc l'éloignement dudit élément de blocage 44 par rapport au disque 28. Ces deux positionnements sont représentés sur les figures 4A et 4B. La figure 4A montre la poignée d'accélération libre et la figure 4B montre la poignée d'accélération 13 bloquée en rotation suivant l'axe Z.

Le dispositif permet donc à partir d'une action mécanique, d'engendrer une action magnétique, ladite action magnétique induisant une action mécanique de blocage parfriction. L'action mécanique de blocage par friction n'a pour valeur que la valeur due à l'effort de répulsion des aimants.

La translation de la couronne 46 suivant l'axe Z et donc vers l'extérieur engendre un contact par friction entre le joint de friction 50 et la cocotte C.

Le coefficient de friction du joint de friction 50 contre la cocotte C, associé à l'effort de pression lié à la répulsion magnétique, interdit toute rotation de la couronne 46, de façon naturelle, et donc de la poignée d'accélération 13 sous l'effet de rappel en rotation de la poignée d'accélération. En effet, le verrouillage en rotation de la poignée d'accélération 13 par rapport aux moyens de blocage 44 est effectué via les gorges 48 des moyens de blocage 44, ménagées autour des guides 40 de l'anneau 24-2.

La rotation du disque 28 via le levier 32 engendre un déplacement longitudinal des moyens de blocage 44 qui engendre le blocage ou le déblocage en rotation de la poignée d'accélération 13 solidaire du dispositif de maintien en position.

L'utilisateur de ce dispositif peut donc tourner la poignée d'accélération 13 solidaire du dispositif de maintien en position, afin de choisir la vitesse souhaitée puis basculer le levier 32 pour tourner le disque 28, faire translater les moyens de blocage 44 qui viennent ainsi maintenir le dispositif de maintien en position et donc la poignée dans la position choisie donc à la vitesse souhaitée.

Le basculement du levier 32 dans le sens inverse fait translater les moyens de blocage 44 suivant l'axe Z et vers la poignée d'accélération 13 et libère la rotation de la poignée d'accélération 13.

Le blocage ou le déblocage s'effectuent donc par simple déplacement du levier 32.

On note qu'à tout instant, l'utilisateur peut vaincre l'effort de blocage par friction qui n'est lié qu'à la répulsion magnétique, effort de blocage largement dépassé par la puissance de la main de l'utilisateur. Le dispositif est ainsi très sécuritaire et ne présente strictement aucun risque de verrouillage intempestif.

La translation des moyens de blocage 44 est ici engendrée par effet magnétique et n'engendre donc aucune usure de pions de verrouillage puisqu'il n'y en a pas. Au-delà de l'absence d'usure c'est la fiabilité du dispositif de maintien en position qui est accrue et son utilisation sécuritaire.

La manœuvre étant purement mécanique et en l'absence de tout besoin d'une source d'alimentation électrique, la mise en place est aisée et ne nécessite aucune connexion avec le système électrique, toujours délicate.

## Revendications

1. Dispositif de maintien en position d'une poignée d'accélération d'un véhicule, montée sur une barre de direction (10), par friction contre une surface d'appui (12) solidaire de ladite barre de direction, comportant des moyens mécaniques (14) comportant un disque (28) mobile en rotation autour d'un axe Z et comportant une face intérieure (28i), une face extérieure (28e) et un trou central (38) placé parallèlement et contre une surface radiale (22), des moyens d'assemblage (16), des moyens de guidage (18), des moyens de positionnement (20) et des moyens de blocage (44) mobiles en translation suivant l'axe Z et comprenant une couronne (46) comportant une face intérieure (46i) et une face extérieure (46e); les moyens de positionnement (20) comportant au moins trois aimants (A), un des au moins trois aimants (A) étant placé sur la face extérieure (28e) du disque (28), sa partie apparente étant un pôle nord, et l'autre des au moins trois aimants (A) étant placé sur la face intérieure (46i) de la couronne (46), sa partie apparente étant un pôle sud ; la face extérieure (28e) du disque (28) et la face intérieure (46i) de la couronne (46) se faisant face.

2. Dispositif de maintien en position d'une poignée d'accélération selon la revendication précédente, **caractérisé en ce que** les moyens mécaniques (14) comportent une surface radiale (22) possédant une face intérieure (22i) et une face extérieure (22^{e}), placées dans le plan X, Y et comporte deux butées (25) étendues sur sa face intérieure (22i) et étendues radialement et en saillie sous ladite face intérieure (22i) de la surface radiale (22), la surface radiale (22) étant munie d'un rebord (24) et d'une ouverture (26), le rebord (24) comprenant un premier anneau (24-1) et un second anneau (24-2), assemblés par les moyens d'assemblage (16), la face intérieure (28i) du disque (28) étant placée contre une face intérieure (22i) de la surface radiale (22), le disque (28) étant maintenu en position suivant l'axe Z par les premier et second anneaux.

3. Dispositif de maintien en position d'une poignée d'accélération selon la revendication précédente; **caractérisé en ce que** les moyens de guidage (18) sont réalisés par des guides (40) développés sur une paroi intérieure du second anneau (24-2), **en ce que** les faces d'extrémité des guides (40), étendues suivant le plan X, Y, sont dans le même plan que les faces du second anneau (24-2) étendues suivant le plan X, Y, et **en ce que** la couronne (46) présente des gorges (48) réparties sur sa paroi périphérique extérieure, la couronne (46) étant placée à l'intérieur de l'anneau (24-2), lesdites gorges (48) ayant une répartition radiale identique à la répartition radiale des guides (40) et une forme conjuguée de celle des guides (40), les gorges (48) étant placées autour et le long des guides (40) pour immobiliser la rotation de la couronne autour de l'axe Z.

4. Dispositif de maintien en position d'une poignée d'accélération selon l'une des revendications précédentes, **caractérisé en ce que** les moyens de blocage (44) comportent un joint de friction (50).

5. Dispositif de maintien en position d'une poignée d'accélération selon l'une des revendications précédentes, **caractérisé en ce que** les au moins trois aimants (A) sont au nombre de douze (A1S) à (A8S) et (A9N) à (A12N) qui se font donc face.

6. Dispositif de maintien en position d'une poignée d'accélération selon l'une des revendications précédentes, **caractérisé en ce que** le disque (28) comporte également un levier (32) développé radialement, dans le plan X, Y, et **en ce que** la rotation du disque (28), contrôlée par la manœuvre du levier (32) permet de positionner le ou les aimants placé sur la face extérieure du disque en face du ou des aimants placés sur la face intérieure de la couronne.

7. Dispositif de maintien en position d'une poignée d'accélération selon la revendication précédente, **caractérisé en ce que** ledit disque (28) forme avec le levier (32) un élément monolithique.

8. Dispositif de maintien en position d'une poignée d'accélération selon l'une des revendications 6 ou 7 en combinaison avec l'une des revendications 2 ou 3, dans lequel le premier anneau (24-1) du rebord (24) comporte une lumière (35) développée le long de la périphérie et sur un angle radial d'environ 10° et qui se positionne entre le premier anneau (24-1) et le second anneau (24-2), lorsque lesdits anneaux (24-1, 24-2) sont assemblés par vissage et le levier (32) s'étend radialement par rapport à l'axe Z à travers cette lumière (35) et peut ainsi pivoter à basculement dans ladite lumière (25) dans le plan X, Y, les butées (25) autour desquelles coulissent les deux décrochements (33-1, 33-2) limitant la rotation du disque (28) et donc le pivotement à basculement du levier (32) à environ 15°, le guidage de la rotation étant assuré par la présence des guides (40) permettant un positionnement radial du disque (28) et donc des aimants portés par ledit disque (28), la rotation du disque (28), contrôlée par la manœuvre du levier (32) permettant de positionner le ou les aimants placé sur la face extérieure du disque en face du ou des aimants placés sur la face intérieure (46i) des moyens de blocage (44).

## Patentansprüche

1. Vorrichtung zum Halten in Position eines Beschleunigungsgriffs eines Fahrzeugs, der auf einer Lenkstange (10) montiert ist, durch Reibung gegen eine Auflageoberfläche (12), die mit der Lenkstange fest verbunden ist, umfassend mechanische Mittel (14), die eine Scheibe (28) umfassen, die in Drehung um eine Z-Achse beweglich ist, und umfassend eine Innenfläche (28i), eine Außenfläche (28e) und ein zentrales Loch (38), das parallel und gegen eine radiale Oberfläche (22) platziert ist, Montagemittel (16), Führungsmittel (18), Positionierungsmittel (20) und Blockierungsmittel (44), die translatorisch entlang der Z-Achse beweglich sind und einen Kranz (46) aufweisen, der eine Innenfläche (46i) und eine Außenfläche (46e) umfasst;
wobei die Positionierungsmittel (20) mindestens drei Magnete (A) umfassen, wobei einer der mindestens drei Magnete (A) auf der Außenfläche (28e) der Scheibe (28) platziert ist, wobei sein sichtbarer Teil ein Nordpol ist, und wobei der andere der mindestens drei Magnete (A) auf der Innenfläche (46i) des Kranzes (46) platziert ist, wobei sein sichtbarer Teil ein Südpol ist; wobei die Außenfläche (28e) der Scheibe (28) und die Innenfläche (46i) des Kranzes (46) einander zugewandt sind.

2. Vorrichtung zum Halten in Position eines Beschleunigungsgriffs nach dem vorhergehenden Anspruch, **dadurch gekennzeichnet, dass** die mechanischen Mittel (14) eine radiale Oberfläche (22) umfassen, die eine Innenfläche (22i) und eine Außenfläche (22^{e),} besitzt, die in der X-Y-Ebene platziert sind und zwei Anschläge (25) umfassen, die sich auf ihrer Innenfläche (22i) erstrecken und sich radial und im Vorsprung unter der Innenfläche (22i) der radialen Oberfläche (22) erstrecken, wobei die radiale Oberfläche (22) mit einer Randleiste (24) und einer Öffnung (26) versehen ist, wobei die Randleiste (24) einen ersten Ring (24-1) und einen zweiten Ring (24-2) aufweist, die durch die Montagemittel (16) zusammengebaut sind, wobei die Innenfläche (28i) der Scheibe (28) gegen eine Innenfläche (22i) der radialen Oberfläche (22) platziert ist, wobei die Scheibe (28) von dem ersten und dem zweiten Ring entlang der Z-Achse in Position gehalten ist.

3. Vorrichtung zum Halten in Position eines Beschleunigungsgriffs nach dem vorhergehenden Anspruch; **dadurch gekennzeichnet, dass** die Führungsmittel (18) von Führungen (40) gebildet sind, die auf einer Innenwand des zweiten Rings (24-2) ausgebildet sind, dass die Endflächen der Führungen (40), die sich entlang der X-Y-Ebene erstrecken, in der gleichen Ebene wie die Flächen des zweiten Rings (24-2), die sich entlang der X-Y-Ebene erstrecken, liegen, und dadurch, dass der Kranz (46) Nuten (48) aufweist, die auf seiner äußeren Umfangswand verteilt sind, wobei der Kranz (46) in dem Inneren des Rings (24-2) platziert ist, wobei die Nuten (48) eine radiale Verteilung identisch zu der radialen Verteilung der Führungen (40) und eine Form aufweisen, die derjenigen der Führungen (40) zugeordnet ist, wobei die Nuten (48) um und entlang der Führungen (40) platziert sind, um die Drehung des Kranzes um die Z-Achse zu blockieren.

4. Vorrichtung zum Halten in Position eines Beschleunigungsgriffs nach einem der vorhergehenden Ansprüche, **dadurch gekennzeichnet, dass** die Blockierungsmittel (44) eine Reibungsdichtung (50) umfassen.

5. Vorrichtung zum Halten in Position eines Beschleunigungsgriffs nach einem der vorhergehenden Ansprüche, **dadurch gekennzeichnet, dass** die mindestens drei Magnete (A) zwölf (A1S) bis (A8S) und (A9N) bis (A12N) sind, die demnach einander zugewandt sind.

6. Vorrichtung zum Halten in Position eines Beschleunigungsgriffs nach einem der vorhergehenden Ansprüche, **dadurch gekennzeichnet, dass** die Scheibe (28) auch einen Hebel (32) umfasst, der radial in der X-Y-Ebene ausgebildet ist, und dass es die Drehung der Scheibe (28), die von der Betätigung des Hebels (32) gesteuert wird, erlaubt, den oder die Magnet(e), die auf der Außenfläche der Scheibe platziert sind, gegenüber dem oder den Magnet(en), die auf der Innenfläche des Kranzes platziert sind, zu positionieren.

7. Vorrichtung zum Halten in Position eines Beschleunigungsgriffs nach dem vorhergehenden Anspruch, **dadurch gekennzeichnet, dass** die Scheibe (28) mit dem Hebel (32) ein monolithisches Element bildet.

8. Vorrichtung zum Halten in Position eines Beschleunigungsgriffs nach einem der Ansprüche 6 oder 7 in Kombination mit einem der Ansprüche 2 oder 3, wobei der erste Ring (24-1) der Randleiste (24) ein Lumen (35) umfasst, das entlang des Umfangs und auf einem radialen Winkel von etwa 10° ausgebildet ist und das sich zwischen dem ersten Ring (24-1) und dem zweiten Ring (24-2) positioniert, wenn die Ringe (24-1, 24-2) durch Zusammenschrauben zusammengebaut sind, und sich der Hebel (32) radial zu der Z-Achse durch dieses Lumen (35) erstreckt und somit in dem Lumen (25) in der X-Y-Ebene kippschwenken kann, wobei die Anschläge (25), um die die beiden Aussparungen (33-1, 33-2) gleiten, die Drehung der Scheibe (28) und daher das Kippschwenken des Hebels (32) auf etwa 15° einschränken, wobei die Führung der Drehung von dem Vorhandensein der Führungen (40) sichergestellt ist, die eine radiale Positionierung der Scheibe (28) und daher der Magnete, die von der Scheibe (28) getragen werden, erlauben, wobei es die Drehung der Scheibe (28), die von der Betätigung des Hebels (32) gesteuert wird, erlaubt, den oder die Magnete, die auf der Außenfläche der Scheibe platziert sind, gegenüber dem oder den Magneten, die auf der Innenfläche (46i) der Blockierungsmittel (44) platziert sind, zu positionieren.

## Claims

1. Device for keeping an accelerator handle, which accelerator handle is mounted on a steering bar (10), in position by means of friction against a bearing surface (12) secured to said steering bar, the device comprising mechanical means (14) having a disc (28) that can rotate about a Z axis and has an inner face (28i), an outer face (28e) and a central hole (38) placed in parallel with and against a radial surface (22), assembly means (16), guide means (18), positioning means (20), and locking means (44) that can move in translation along the Z axis and comprise a ring (46) having an inner face (46i) and an outer face (46e);
the positioning means (20) comprising at least three magnets (A), one of the at least three magnets (A) being placed on the outer face (28e) of the disc (28), its visible part being a north pole, and the other of the at least three magnets (A) being placed on the inner face (46i) of the ring (46), its visible part being a south pole;
the outer face (28e) of the disc (28) and the inner face (46i) of the ring (46) facing one another.

2. Device for keeping an accelerator handle in position according to the preceding claim, **characterized in that** the mechanical means (14) comprise a radial surface (22) which has an inner face (22i) and an outer face (22^{e}), which faces are placed in the X, Y plane, and comprises two stops (25) that extend on the inner face (22i) thereof and extend radially and so as to project under said inner face (22i) of the radial surface (22), the radial surface (22) being provided with a rim (24) and an opening (26), the rim (24) comprising a first annulus (24-1) and a second annulus (24-2), which annuli are assembled by the assembly means (16), the inner face (28i) of the disc (28) being placed against an inner face (22i) of the radial surface (22), the disc (28) being held in position along the Z axis by the first and second annuli.

3. Device for keeping an accelerator handle in position according to the preceding claim; **characterized in that** the guide means (18) are formed by guides (40) formed on an inner wall of the second annulus (24-2), **in that** the end faces of the guides (40), which end faces extend along the X, Y plane, are in the same plane as the faces of the second annulus (24-2) that extend along the X, Y plane, and **in that** the ring (46) has grooves (48) distributed over the outer peripheral wall thereof, the ring (46) being placed inside the annulus (24-2), said grooves (48) having a radial distribution identical to the radial distribution of the guides (40) and a shape coupled to that of the guides (40), the grooves (48) being placed around and along the guides (40) in order to immobilize the rotation of the ring about the Z axis.

4. Device for keeping an accelerator handle in position according to any of the preceding claims, **characterized in that** the locking means (44) comprise a friction seal (50).

5. Device for keeping an accelerator handle in position according to any of the preceding claims, **characterized in that** the at least three magnets (A) are twelve in number (A1S) to (A8S) and (A9N) to (A12N) which thus face one another.

6. Device for keeping an accelerator handle in position according to any of the preceding claims, **characterized in that** the disc (28) also comprises a lever (32) formed radially, in the X, Y plane, and **in that** the rotation of the disc (28), which rotation is controlled by operating the lever (32), makes it possible to position the magnet(s) placed on the outer face of the disc opposite the magnet(s) placed on the inner face of the ring.

7. Device for keeping an accelerator handle in position according to the preceding claim, **characterized in that** said disc (28), together with the lever (32), forms a monolithic element.

8. Device for keeping an accelerator handle in position according to either claim 6 or claim 7 in combination with either claim 2 or claim 3, wherein the first annulus (24-1) of the rim (24) comprises a slot (35) which is formed along the periphery and over a radial angle of approximately 10° and which is positioned between the first annulus (24-1) and the second annulus (24-2), when said annuli (24-1, 24-2) are assembled by means of screwing and the lever (32) extends radially with respect to the Z axis through this slot (35) and can thus pivot so as to tilt in said slot (25) in the X, Y plane, the stops (25) around which the two recesses (33-1, 33-2) slide limiting the rotation of the disc (28) and therefore the tilt pivoting of the lever (32) to approximately 15°, the guiding of the rotation being ensured by the presence of guides (40) that allow radial positioning of the disc (28) and therefore of the magnets carried by said disc (28), the rotation of the disc (28), which rotation is controlled by operating the lever (32), making it possible to position the magnet(s) placed on the outer face of the disc opposite the magnet(s) placed on the inner face (46i) of the locking means (44).
